# DEMANDE DE BREVET EUROPEEN

(11) **EP 0 729 876 A1**
(43) Date de publication de la demande: **04.09.1996**
(21) Numéro de dépôt: 96400425.3
(22) Date de dépôt: 28.02.1996
(51) Int. Cl.: B62D 17/00, B60G 3/20

(54) **Train arrière pour véhicule automobile**

(30) Priorité: 28.02.1995 FR 9502310
(71) Demandeur: Société Anonyme dite: REGIE NATIONALE DES USINES RENAULT, F-92109 Boulogne Billancourt (FR)
(72) Inventeur: Coquery, Jean, 92160 Antony (FR); Fior, Claude, 32110 Nogaro (FR)

(57) **Abrégé**

Train arrière de véhicule automobile du type dans lequel une roue est portée par un support (1) monté à pivotement entre des bras de suspension supérieur (22) et inférieur (21), au niveau de l'extrémité libre desdits bras, dont les àutres extrémités sont articulées sur le châssis (3), caractérisé en ce que le support de roue (1) porte un bras (91) qui s'étend transversalement en direction du plan longitudinal médian du véhicule et est solidarisé à un élément de renfort (92) porté par le support de roue (1), d'une part, et à une biellette (9) de direction articulée sur le châssis (3), d'autre part.

## Description

La présente invention concerne un train arrière de véhicule automobile, du type comprenant un support de roue monté entre des bras de suspension inférieur et supérieur articulés sur le châssis du véhicule.

La publication EP-0.182.606 décrit un train de suspension comprenant des bras inférieur et supérieur aux extrémités libres desquelles est monté un support de roue. Les principaux paramètres du train (angle de carrossage, angle de pince, constante de rappel antiroulis entre les roues, raideur de la suspension), ne peuvent être aisément modifiés, ce qui constitue un défaut rédhibitoire pour des véhicules à vocation sportive pour lesquels on souhaite pouvoir adapter ceux-ci, même au prix d'un pilotage plus fin, à des conditions de roulage particulières.

La présente invention propose un train arrière de véhicule palliant les inconvénients précités. A cet effet, le train de suspension proposé par la présente invention, permet de régler de manière aisée aussi bien l'angle de pince, l'angle de carrossage et la hauteur de carrosserie ainsi que la valeur de la constante de rappel antiroulis entre les roues.

Un autre avantage du train selon l'invention est de limiter le coût de fabrication du véhicule dont la production en petite série ne justifie pas le développement de constituants spécifiques, notamment de supports de roue distincts pour les trains avant et arrière. Ainsi, chacune des roues du véhicule est solidarisée à un même support de roue de base, sur lequel sont montés des éléments spécifiques selon que la roue soit ou non directrice.

Le train arrière de véhicule automobile selon l'invention est du type dans lequel une roue est portée par un support monté à pivotement entre des bras de suspension supérieur et inférieur, au niveau de l'extrémité libre desdits bras, dont les autres extrémités sont articulées sur le châssis, caractérisé en ce que le support de roue porte un bras qui s'étend transversalement en direction du plan longitudinal médian du véhicule et est solidarisé à un élément de renfort porté par le support de roue, d'une part, et à une biellette de direction articulée sur le châssis, d'autre part.

Selon une autre caractéristique de l'invention, le bras transversal reçoit le pivot de montage du support de roue sur le bras supérieur.

Selon une autre caractéristique de l'invention, la biellette de direction de la roue est articulée sur un support porté par le châssis.

Selon une autre caractéristique de l'invention, les droites passant par les points d'articulation sur le châssis de chaque bras de suspension s'étendent sensiblement transversalement.

Selon une autre caractéristique de l'invention, un combiné ressort-amortisseur est disposé entre l'extrémité libre du bras supérieur et le châssis, d'axe s'étendant dans un plan sensiblement longitudinal coupant la droite passant par les articulations de liaison du bras supérieur sur le châssis en un point du segment de ladite droite compris entre lesdites articulations de liaison.

Selon une autre caractéristique de l'invention, l'élément de renfort du bras transversal est réalisé sous la forme d'un triangle dont l'une des bases est montée à pivotement sur une pièce rapportée au support de roue, et dont le sommet opposé à ladite base est fixé rigidement à l'extrémité libre du bras transversal.

Selon une autre caractéristique de l'invention, une barre stabilisatrice anti-dévers s'étendant transversalement relie les demi-trains situés de part et d'autre du plan longitudinal médian du véhicule, ladite barre étant constituée d'un tronçon central dont chaque extrémité est portée par un palier fixé sur le châssis entre le point d'articulation supérieur du combiné ressort-amortisseur et le point d'articulation du bras supérieur sur le châssis.

Selon une autre caractéristique de l'invention, les extrémités inférieures du combiné ressort-amortisseur et de la biellette de liaison de la barre stabilisatrice avec le bras supérieur sont solidarisées à un même axe transversal porté par le bras supérieur de suspension.

On comprendra mieux les buts, aspects et caractéristiques de la présente invention, d'après la description donnée ci-après d'un mode de réalisation de l'invention présenté à titre d'exemple non limitatif, en se référant aux dessins annexés, dans lesquels :
- La figure 1 est une vue en perspective d'un demi-train à triangles superposés selon l'invention,
- La figure 2 est une vue de côté du demi-train de la figure 1,

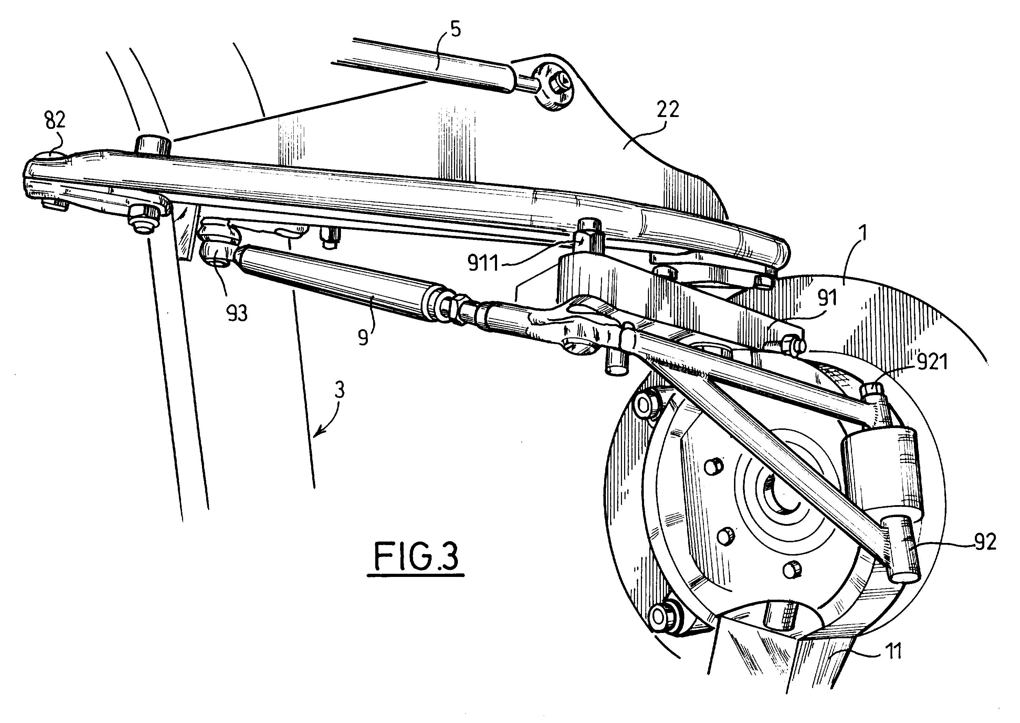

- La figure 3 est une vue de détail du demi-train représenté à la figure 1, au niveau de la liaison de la biellette de réglage de pince avec le bras porté par le support de roue.
- La figure 4 est une vue de détail du demi-train représenté à la figure 1, au niveau d'une articulation rotulaire de montage d'un des bras sur le châssis.

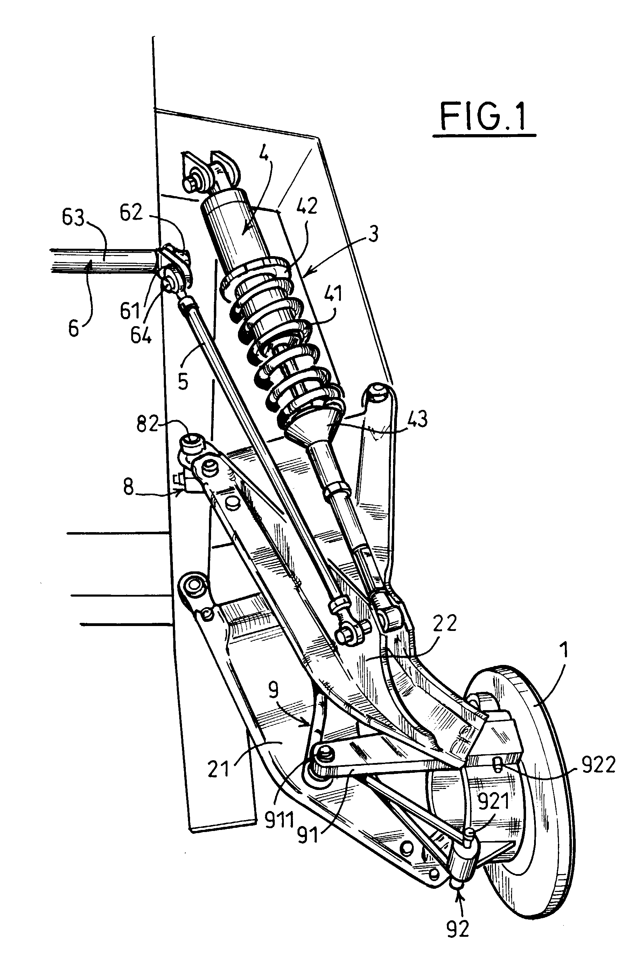

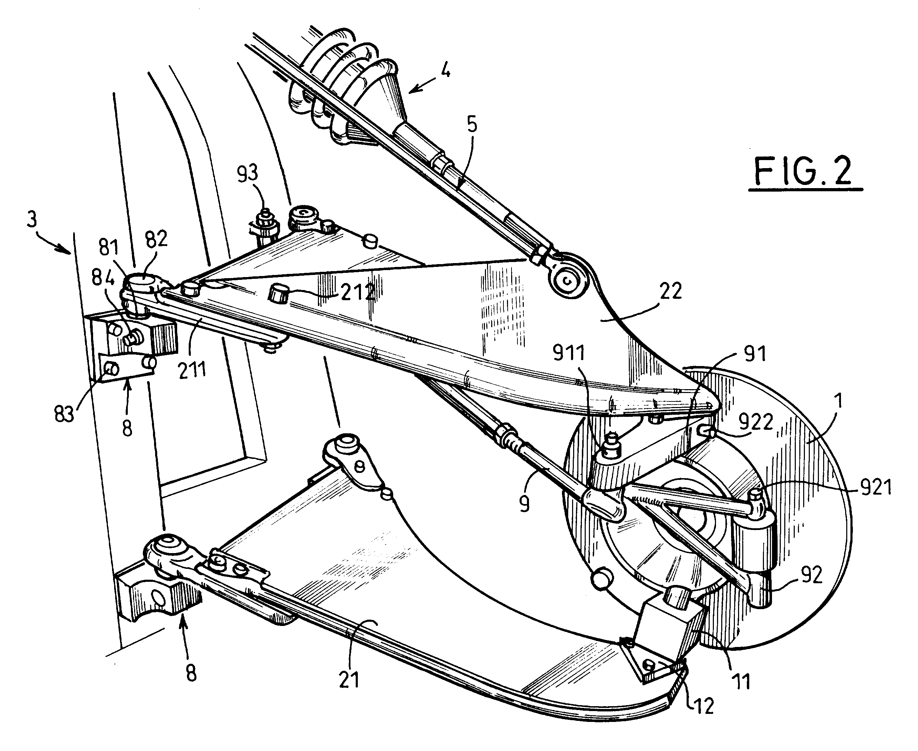

En référence aux figures 1 et 2, la suite de la description ne décrira qu'un demi-train de suspension, en l'occurrence le demi-train arrière gauche, étant entendu que le véhicule comporte deux demi-trains identiques montés symétriquement de part et d'autre du plan longitudinal médian du véhicule.

Le demi-train représenté comporte des bras de suspension supérieur 22 et inférieur 21 portés par le châssis 3. Chaque bras (21, 22) longitudinal de suspension est monté à articulation sur le châssis 3 par deux ensembles rotulaires 8 situés au niveau de l'extrémité avant du bras.

Les droites passant par les points d'articulation sur le châssis 3 de chacun des bras de suspension (21, 22) s'étendent sensiblement transversalement.

Les bras (21, 22) sont préférentiellement réalisés en construction mécano-soudée.

Les extrémités inférieure et supérieure d'un combiné ressort-amortisseur 4 sont respectivement articulées à l'extrémité libre du bras supérieur 22 et sur le châssis 3.

L'axe longitudinal du combiné ressort-amortisseur s'étend dans un plan sensiblement longitudinal du véhicule et coupe la droite passant par les articulations de liaison du bras supérieur 22 sur le châssis 3 en un point du segment de ladite droite compris entre lesdites articulations de liaison.

Le réglage de la hauteur de caisse s'effectue simplement en positionnant de manière adéquate un double écrou 42 d'appui de l'extrémité supérieure du ressort hélicoïdal 41 sur le corps d'amortisseur 43. La flexibilité de suspension du véhicule est aisément modifiée par le montage d'un combiné ressort-amortisseur présentant des caractéristiques appropriées.

Une barre stabilisatrice anti-dévers 6, de type à torsion, s'étendant transversalement relie les demi-trains situés de part et d'autre du plan longitudinal médian du véhicule. La barre 6 est constituée d'un tronçon central 63 et de deux tronçons d'extrémité 61 dont chacun relie une extrémité du tronçon central à une biellette de liaison 5 avec le bras supérieur 22 du demi-train par son extrémité inférieure. L'extrémité supérieure de la biellette de liaison 5 est solidarisée au tronçon d'extrémité 62 correspondant par un ensemble boulonné 64 engagé dans un trou dudit tronçon 62. Le tronçon d'extrémité 62 comporte plusieurs trous, le choix de l'un ou l'autre desdits trous, pour monter l'ensemble boulonné 64 permet de régler le couple de rappel de la barre 6 en modifiant la valeur du bras de levier entre la biellette de liaison 5 et la barre 6.

L'agencement choisi pour la barre anti-dévers 6 permet en outre de procéder à un montage et un démontage aisé de la barre anti-dévers 6 sur le châssis 3, sans avoir à enlever le moteur. On pourra ainsi aisément monter une barre de raideur optimisée et donc adapter la raideur anti-roulis du véhicule à des conditions de roulage déterminées.

Les extrémités inférieures du combiné ressort-amortisseur 4 et de la biellette de liaison 5 de la barre stabilisatrice anti-dévers 6 avec le bras supérieur 22 sont solidarisées à un même axe monté entre les ailes d'une chape portée par le bras supérieur 22 de suspension.

Chaque extrémité du tronçon central 63 de la barre anti-dévers 6 est portée par un palier 62 sur le châssis 3. Chaque palier 62 est agencé entre des plans horizontaux passant respectivement par l'articulation supérieure du combiné ressort-amortisseur 4 sur le châssis 3 et le point intérieur d'articulation du bras supérieur 22 sur le châssis 3.

Un support de roue 1 comporte un bras transversal 91 à l'extrémité libre duquel sont solidarisés une biellette de réglage 9 de la pince, d'une part, et un élément de renfort 92 du bras 91, d'autre part. Le bras 91 s'étend transversalement en direction du plan longitudinal médian du véhicule.

Afin de permettre le montage du bras 91 sur le support de roue 1, ce dernier comporte à sa partie supérieure, selon un mode de réalisation de l'invention, une glissière présentant une section transversale en forme de queue d'aronde (non représentée). L'extrémité du bras 91 présente une embase en forme de queue d'aronde correspondant à celle de la glissière du support de roue sur laquelle elle est engagée par coulissement. Le bras est maintenu solidaire du support de roue par un ensemble boulonné 922.

Le bras peut aussi être fixé sur le support par tous moyens connus, notamment par soudage ou vissage.

Le bras transversal 91 reçoit le pivot de montage du support de roue 1 sur le bras supérieur 22, le support de roue 1 étant monté directement à pivotement sur le bras inférieur 21, au moyen d'un boîtier fixé sur un support 12 d'une articulation de type sphérique logée dans un boîtier 11 fixé sur un support 12 porté par le bras inférieur 21.

Le support de roue est immobilisé en rotation au moyen d'une biellette de direction, dont l'une des extrémités est solidarisée en un point du châssis. Cette biellette de direction, de longueur réglable, permet d'ajuster la pince de la roue. L'autre extrémité de la biellette est solidarisée à un ensemble constitué du bras rapporté sur le support de roue et de l'élément de renfort dudit bras.

La biellette 9 est montée sur le châssis 3 au moyen d'une articulation rotulaire 93 située au voisinage de la droite passant par les articulations extérieure et inférieure du bras supérieur, à proximité de l'articulation extérieure.

L'élément de renfort 92 est conformé en triangle dont l'une des bases, amovible, comprend un ensemble boulonné 921 dont la tige est montée à pivotement dans un alésage du support de roue 1. Cet élément de renfort reprend une partie des efforts exercés sur le bras transversal lors du roulage.

La biellette 9 et l'élément de renfort 92 sont solidarisés au bras par un même axe de liaison constitué par un ensemble boulonné 911.

Le même support de roue 1 peut être utilisé pour les roues avant, directrices, du véhicule en utilisant l'alésage pour le montage d'un axe solidarisé à l'extrémité d'une biellette de direction. Le même support de roue peut donc être utilisé indifféremment pour le train avant ou arrière du véhicule. Une telle conception permet de limiter sensiblement le coût de fabrication du véhicule.

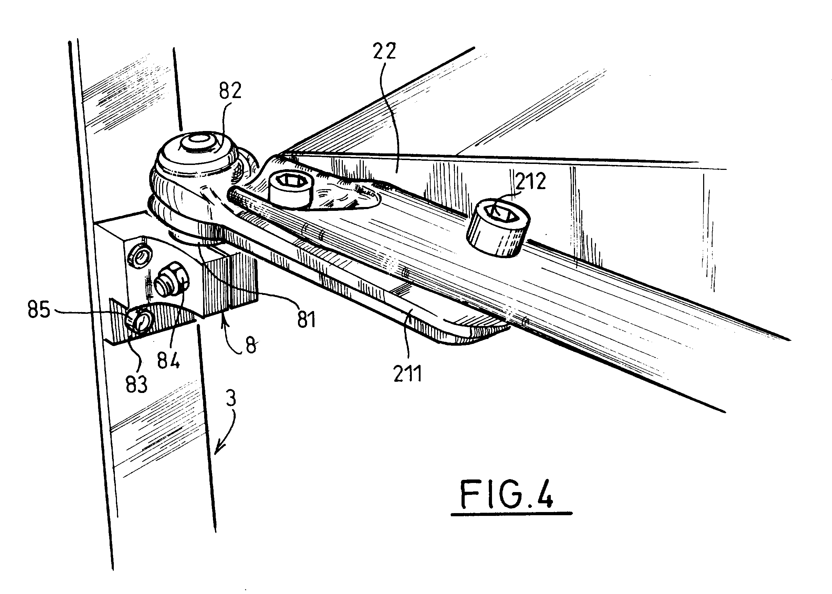

En référence aux figures 2 et 4, chaque ensemble rotulaire 8 se compose d'un support 83 et d'un boîtier 82 comportant une queue 211 de montage rapportée au moyen de vis 212 sur le bras (21,22) au niveau de la partie avant de ce dernier. Le support 83 et le boîtier 82 sont reliés par une tige dont l'une des extrémités comporte une tête sphérique montée dans un logement du boîtier 82.

Le support 83 comporte deux parties parallélépipédiques dont les bases respectives sont disposées perpendiculairement entre elles en formant un T, le premier parallélépipède étant fixé sur le châssis au moyen de quatre vis 85 disposées à sa périphérie, ce premier parallélépipède formant un socle pour le deuxième parallélépipède.

Le second parallélépipède comporte un alésage d'axe parallèle à la base dudit parallélépipède. Une fente s'étendant entre la base et l'alésage dans un plan transversal à ladite base, délimite deux branches disposées de part et d'autre de la fente. Les deux branches et l'alésage du second parallélépipède constituent une cosse de montage du corps de la tige au niveau de son extrémité opposée à celle comportant la tête sphérique.

Le diamètre de l'alésage est suffisamment grand pour permettre le montage du corps de la tige par emboîtement sur cette dernière.

Un boulon 84 engagé dans un alésage d'axe parallèle au plan de la base du deuxième parallélépipède et traversant ledit parallélépipède de part et d'autre, relie les deux branches de la cosse et permet le rapprochement et le serrage de ces branches autour du corps de la tige.

A cet effet, la tête du boulon 84 prend appui sur l'une des faces latérales du second parallélépipède et un écrou coopérant avec l'extrémité filetée du boulon prend appui contre la face latérale opposée.

L'inclinaison respective, par rapport à un plan de référence horizontal, des droites passant par les points d'articulation sur le châssis 3 de chaque bras de suspension permet d'obtenir des variations de carrossage déterminées.

Le réglage initial de l'angle de carrossage du plan de la roue s'effectue en interposant des cales 81 d'épaisseur appropriée entre le montant vertical du châssis 3 et la face sensiblement verticale des supports 83 des articulations sur le châssis 3 des bras de suspension (21,22).

L'interposition de ces cales 81, d'épaisseur appropriée, entre le support 83 et le boîtier 82 permet d'adapter la loi de variation de carrossage à une hauteur de caisse choisie.

Le réglage initial de l'angle de pince du plan de la roue s'effectue en réglant la longueur de la biellette 9.

L'interposition de cales (non représentées) entre un support, identique au support 83, de l'articulation 93, et un axe solidarisant l'extrémité de la biellette 9 à ce support permet d'adapter la loi de variation de la pince à la hauteur de caisse choisie.

On peut donc faire varier aisément l'angle de pince et de carrossage du plan de la roue ainsi que leur loi de variation respective.

Bien entendu, l'invention n'est nullement limitée au mode de réalisation décrit et illustré qui n'a été donné qu'à titre d'exemple.

Au contraire, l'invention comprend tous les équivalents techniques des moyens décrits ainsi que leurs combinaisons si celles-ci sont effectuées suivant son esprit.

## Revendications

1. Train arrière de véhicule automobile du type dans lequel une roue est portée par un support (1) monté à pivotement entre des bras de suspension supérieur (22) et inférieur (21), au niveau de l'extrémité libre desdits bras, dont les autres extrémités sont articulées sur le châssis (3), caractérisé en ce que le support de roue (1) porte un bras (91) qui s'étend transversalement en direction du plan longitudinal médian du véhicule et est solidarisé à un élément de renfort (92) porté par le support de roue (1), d'une part, et à une biellette (9) de direction articulée sur le châssis (3), d'autre part.

2. Train selon la revendication 1, caractérisé en ce que le bras transversal (91) reçoit le pivot de montage du support de roue (1) sur le bras supérieur (22).

3. Train selon la revendication 1, caractérisé en ce que la biellette de direction (9) de la roue est articulée sur un support (93) porté par le châssis (3).

4. Train selon l'une quelconque des revendications 1 à 3, caractérisé en ce que les droites passant par les points d'articulation de chaque bras de suspension (21,22) sur le châssis (3) s'étendent dans une direction sensiblement transversale.

5. Train selon la revendication 4, caractérisé en ce qu'un combiné ressort-amortisseur (4) est disposé entre l'extrémité libre du bras supérieur (22) et le châssis (3), d'axe s'étendant dans un plan sensiblement longitudinal coupant la droite passant par les articulations de liaison du bras supérieur (22) sur le châssis (3) en un point du segment de ladite droite compris entre lesdites articulations de liaison.

6. Train selon la revendication 5, caractérisé en ce que l'élément de renfort (92) du bras est réalisé sous la forme d'un triangle dont l'une des bases est montée à pivotement sur une pièce rapportée au support de roue (1), et dont le sommet opposé à ladite base est fixé à l'extrémité libre du bras (91) transversal.

7. Train selon l'une quelconque des revendications précédentes, caractérisé en ce qu'une barre stabilisatrice anti-dévers (6) s'étendant transversalement relie les demi-trains situés de part et d'autre du plan longitudinal médian du véhicule, ladite barre étant constituée d'un tronçon central (63) dont chaque extrémité est portée par un palier (62) fixé sur le châssis (3) entre le point d'articulation supérieur du combiné ressort-amortisseur (4) et le point d'articulation du bras supérieur (22) sur le châssis (3).

8. Train selon la revendication 7, caractérisé en ce que les extrémités inférieures du combiné ressort-amortisseur (4) et de la biellette de liaison (5) de la barre stabilisatrice (6) avec le bras supérieur (22) sont solidarisées à un même axe transversal porté par le bras supérieur (22) de suspension.
